(19) Europäisches Patentamt
European Patent Office
Office européen des brevets

(11) EP 4 159 806 A1

(12) EUROPEAN PATENT APPLICATION
published in accordance with Art. 153(4) EPC

(43) Date of publication:
**05.04.2023 Bulletin 2023/14**

(21) Application number: **20938546.7**

(22) Date of filing: **02.06.2020**

(51) International Patent Classification (IPC):
***C08K 9/06*** *(2006.01)* ***C08L 51/04*** *(2006.01)*
***C08L 69/00*** *(2006.01)* ***C08K 3/013*** *(2018.01)*
***C08K 3/34*** *(2006.01)*

(52) Cooperative Patent Classification (CPC):
**C08K 3/013; C08K 3/34; C08K 9/06; C08L 51/04; C08L 69/00**

(86) International application number:
**PCT/JP2020/021745**

(87) International publication number:
**WO 2021/245781 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Teijin Limited**
**Osaka 530-0005 (JP)**

(72) Inventor: **KUBOI Hiroshi**
**Osaka-shi Osaka 530-0005 (JP)**

(74) Representative: **Beckmann, Claus**
**Kraus & Weisert**
**Patentanwälte PartGmbB**
**Thomas-Wimmer-Ring 15**
**80539 München (DE)**

# (54) POLYCARBONATE RESIN COMPOSITION AND MOLDED ARTICLE HAVING DOT-LIKE APPEARANCE

(57) A polycarbonate resin composition containing 0.01 to 8 parts by weight of (B) synthetic mica powder surface-coated with a silicone binder resin containing a coloring agent (component B) with respect to 100 parts by weight of (A) polycarbonate resin (component A) is characterized by excellent molded article appearance.

EP 4 159 806 A1

Processed by Luminess, 75001 PARIS (FR)

## Description

[Technical field]

The present invention relates to a polycarbonate resin composition and a molded article having a dot-like appearance. More specifically, it relates to a polycarbonate resin composition with an excellent molded article appearance and a molded article with excellent designability of a dot-like appearance that are obtained by blending synthetic mica powder surface-coated with a silicone binder resin containing a coloring agent with a polycarbonate resin.

[Background Art]

Aromatic polycarbonate resins, due to their excellent mechanical properties, moldability, and thermal properties, are used in various applications, mainly in the fields of OA equipment, electronic and electrical equipment, and the like. In recent years, along with the tendency of thinning and weight reduction in the applications such as OA equipment and home electric appliances, there is an increasing demand for resin materials that have high impact resistance, high flame resistance, and an excellent molding appearance. As such a material, PTL 1 proposes a resin composition obtained by blending a rubber-reinforced styrenic resin, talc, and wollastonite with an aromatic polycarbonate.

On the other hand, in applications such as OA equipment and home electric appliances, there is an increasing demand for resin materials that enable production of a molded article having excellent designability. As such a material, PTL 2 proposes a thermoplastic resin composition having a pebble-like appearance obtained by blending and dispersing synthetic mica powder, surface-coated with a resin containing a coloring agent, with a thermoplastic resin.

However, at present, there has not yet been obtained such a polycarbonate resin composition from an aromatic polycarbonate resin as having an excellent molded article appearance while maintaining excellent mechanical properties, moldability and thermal properties.

[Citation List]

[Patent Literature]

[PTL 1] Japanese Unexamined Patent Application NO. 2006-342199
[PTL 2] Japanese Unexamined Patent Application NO. 2009-120637

[Summary of Invention]

[Technical Problem]

An object of the present invention is to provide a polycarbonate resin composition excellent in molded article appearance and a molded article having a dot-like appearance.

[Solution to Problem]]

The inventors of the present invention have made intensive studies to solve the above problems, and as a result, have found that a polycarbonate resin composition having an excellent molded article appearance can be obtained by blending synthetic mica powder, surface-coated with a silicone binder resin containing a coloring agent, with a polycarbonate resin, and that a molded article formed from the resin composition has a dot-like appearance, thereby completing the present invention.

That is, according to the present invention, the following (item 1) to (item 9) are provided.

(Item 1)

A polycarbonate resin composition containing 0.01 to 8 parts by weight of (B) synthetic mica powder surface-coated with a silicone binder resin containing a coloring agent (component B) with respect to 100 parts by weight of (A) polycarbonate resin (component A).

(Item 2)

The polycarbonate resin composition according to item 1, wherein the synthetic mica powder of component B has an average particle size of 100 to 5000 μm.

(Item 3)

The polycarbonate resin composition according to item 1, wherein the composition contains 1 to 100 parts by weight of (C) rubber-reinforced styrenic resin (component C) with respect to 100 parts by weight of (A) polycarbonate resin (component A).

(Item 4)

The polycarbonate resin composition according to item 1, wherein the composition contains 1 to 100 parts by weight of (D) inorganic filler other than synthetic mica powder (component D) with respect to 100 parts by weight of (A) polycarbonate resin (component A).

(Item 5)

The polycarbonate resin composition according to item 4, wherein the inorganic filler of component D is at least one inorganic filler selected from the group consisting of talc and wollastonite.

(Item 6)

The polycarbonate resin composition according to item 1, wherein the composition contains 1 to 100 parts by weight of (E) flame retardant (component E) with respect to 100 parts by weight of (A) polycarbonate resin (component A).

(Item 7)

The polycarbonate resin composition according to item 1, wherein the composition contains 0.01 to 10 parts by weight of (F) anti-dripping agent (component F) with respect to 100 parts by weight of (A) polycarbonate resin (component A).

(Item 8)

The polycarbonate resin composition according to item 1, wherein the composition contains 0.01 to 10 parts by weight of (G) release agent (component G) with respect to 100 parts by weight of (A) polycarbonate resin (component A).

(Item 9)

A molded article having a dot-like appearance formed from the polycarbonate resin composition according to any one of items 1 to 8.

[Advantageous Effects of Invention]

Since the polycarbonate resin composition of the present invention is excellent in molded article appearance, and the molded article formed from the resin composition has a dot-like appearance with excellent designability, the polycarbonate resin composition is suitably used as a housing material in the field such as OA equipment, electronic and electrical equipment, and the like, and specifically suitably used in the application for a casing of mobile phones, tablets, and the like.

[Brief Description of Drawings]

Fig. 1 is a photograph showing an example of dot-like appearance of a molded article of the present invention.

[Description of Embodiments]

The details of the present invention will be described below.

(Component A: polycarbonate resin)

The polycarbonate resin used in the present invention is obtained by reacting a dihydric phenol with a carbonate precursor. Examples of reaction methods include an interfacial polymerization method, a melt transesterification method, a solid-phase transesterification method of a carbonate prepolymer, and a ring-opening polymerization method of a cyclic carbonate compound.

Representative examples of the dihydric phenol used herein include hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl) ketone, bis(4-hydroxyphenyl) ester, bis(4-hydroxy-3-methylphenyl)sulfide, 9,9-bis(4-hydroxyphenyl)fluorene, and 9,9-bis(4-hydroxy-3-methylphenyl)fluorene. Preferred dihydric phenols are bis(4-hydroxyphenyl)alkanes, in which bisphenol A is particularly preferred from the standpoint of impact resistance, and is thus widely used.

Used examples of the carbonate precursor include carbonyl halides, carbonate diesters, and haloformates, and specifically include phosgene, diphenyl carbonate, and dihaloformates of dihydric phenol.

In producing an aromatic polycarbonate resin by interfacial polymerization of the dihydric phenol and carbonate precursor, there may be used, as necessary, a catalyst, a chain-end terminator, an antioxidant to prevent oxidation of the dihydric phenol, and the like. In addition, the aromatic polycarbonate resin of the present invention includes a branched polycarbonate resin obtained by copolymerizing a polyfunctional aromatic compound of trifunction or higher, a polyester carbonate resin obtained by copolymerizing an aromatic or aliphatic (including alicyclic) difunctional carboxylic acid, a copolymerized polycarbonate resin obtained by copolymerizing a difunctional alcohol (including alicyclic), and a polyester carbonate resin obtained by copolymerizing the difunctional carboxylic acids and difunctional alcohol together. In addition, it can be a mixture of 2 or more types of the obtained aromatic polycarbonate resin.

The branched polycarbonate resin can impart anti-dripping property and the like to the resin composition of the present invention. Examples of the polyfunctional aromatic compound of trifunction or higher used in the branched polycarbonate resin include phloroglucine, phloroglucide, or trisphenol such as 4,6-dimethyl-2,4,6-tris(4-hydroxydiphenyl)heptene-2,2,4,6-trimethyl-2,4,6-tris(4-hydroxydiphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and 4-{4-[1,1-bis(4-hydroxyphenyl)ethyl]benzene}-$\alpha,\alpha$-dimethylbenzylphenol, tetra(4-hydroxyphenyl)methane, bis(2,4-dihydroxyphenyl) ketone, 1,4-bis(4,4-dihydroxytriphenylmethyl)benzene, or trimellitic acid, pyromellitic acid, benzophenonetetracarboxylic acid and acidchloride thereof, and among them, 1,1,1-tris(4-hydroxyphenyl)ethane and 1,1,1-tris(3,5-dimethyl-4-hydroxyphenyl)ethane are preferred, and 1,1,1-tris(4-hydroxyphenyl)ethane is particularly preferred.

Constitutional units derived from a polyfunctional aromatic compound in the branched polycarbonate are preferably 0.01 to 1 mol%, more preferably 0.05 to 0.9 mol%, and further preferably 0.05 to 0.8 mol% with respect to the total 100 mol% of the constitutional units derived from the dihydric phenol and the constitutional units derived from the polyfunctional aromatic compound.

Further, particularly in the case of the melt transesterification method, a branched structural unit may be produced as a side reaction, and the branched structural unit is preferably 0.001 to 1 mol%, more preferably 0.005 to 0.9 mol%, and further preferably 0.01 to 0.8 mol% with respect to the total 100 mol% of the constitutional units derived from the dihydric phenol and the branched structural unit. The proportion of the branched structure can be calculated from 1H-NMR measurement.

Aliphatic difunctional carboxylic acid is preferably $\alpha,\omega$-dicarboxylic acid. Preferred examples of the aliphatic difunctional carboxylic acid include linear saturated aliphatic dicarboxylic acid such as sebacic acid (decanedioic acid), dodecanedioic acid, tetradecanedioic acid, octadecanedioic acid, and icosanedioic acid, and alicyclic dicarboxylic acid such as cyclohexanedicarboxylic acid. Alicyclic diol is more preferable as the difunctional alcohol, and examples thereof include cyclohexanedimethanol, cyclohexanediol, and tricyclodecanedimethanol.

Further, a polycarbonate-polydiorganosiloxane copolymer resin can also be used as the polycarbonate resin (component A).

Reaction types of the methods for producing the polycarbonate resin of the present invention, such as the interfacial polymerization method, the melt transesterification method, the solid-phase transesterification method of a carbonate prepolymer, and the ring-opening polymerization method of a cyclic carbonate compound, are well-known

methods that can be found in various literatures and patent publications.

In producing the polycarbonate resin composition of the present invention, the viscosity average molecular weight (M) of the polycarbonate resin is not particularly limited, but is preferably $1.8\times10^4$ to $4.0\times10^4$, more preferably $2.0\times10^4$ to $3.5\times10^4$, and further preferably $2.2\times10^4$ to $3.0\times10^4$. Polycarbonate resins having a viscosity average molecular weight of less than $1.8\times10^4$ may not impart good mechanical properties. On the other hand, a resin composition obtained from a polycarbonate resin having a viscosity average molecular weight exceeding $4.0\times10^4$ is inferior in versatility due to poor fluidity during injection molding.

In order to obtain the viscosity average molecular weight referred to in the present invention, first the specific viscosity ($\eta_{SP}$) is determined through the calculation of the following formula by using an Ostwald viscometer and a solution obtained by dissolving 0.7 g of polycarbonate in 100 ml of methylene chloride at 20°C,

$$\text{Specific viscosity } (\eta_{SP}) = (t-t_0)/t_0$$

[$t_0$ is the fall time of the methylene chloride in second, t is the fall time of the sample solution in second] the viscosity average molecular weight M is calculated from the determined specific viscosity ($\eta_{SP}$) by the following formula.

$\eta_{SP}/c=[\eta]+0.45\times[\eta]^2c$ (wherein[$\eta$] is the intrinsic viscosity)
$[\eta]=1.23\times10^{-4}M^{0.83}$
$c=0.7$

The viscosity average molecular weight of the polycarbonate resin in the polycarbonate resin composition of the present invention is calculated in the following manner. That is, the composition is mixed with methylene chloride in the amount of 20 to 30 times the weight of the composition to dissolve the soluble part in the composition. The soluble part is collected by celite filtration. The solvent is then removed from the resulting solution. After removing the solvent, the solid is sufficiently dried to obtain a solid of the component soluble in methylene chloride. From a solution obtained by dissolving 0.7 g of this solid in 100 ml of methylene chloride, the specific viscosity at 20°C is obtained in the same manner as described above, and the viscosity average molecular weight M is calculated from the specific viscosity in the same manner as described above.

(Component B: Synthetic mica powder surface-coated with a silicone binder resin containing a coloring agent)

The synthetic mica powder used in the present invention is surface-coated with a silicone binder resin containing a coloring agent.

Use of synthetic mica powder surface-coated with a silicone binder resin suppresses yellowing compared with, for example, use of synthetic mica powder surface-coated with an epoxy binder resin, and thus imparts an excellent color tone, enabling to obtain a molded article having a good dot-like appearance.

The coloring agent includes inorganic pigments and organic dyes/pigments, and is not particularly limited as long as it can color the product.

Examples of the inorganic pigment include oxide pigments such as carbon black, titanium oxide, zinc oxide, red iron oxide, chromium oxide, iron black, titan yellow, zinc-iron brown, copper-chromium black, and copper-iron black.

Examples of organic dye/pigment such as organic pigments and organic dyes include phthalocyanine dye/pigment; condensed polycyclic dye/pigment such as azo, thioindigo, perinone, perylene, quinacridone, dioxazine, isoindolinone, and quinophthalone; anthraquinone, perinone, perylene, methine, quinoline, heterocyclic, and methyl dye/pigment. These coloring agents may be used singly or in combination of two or more.

The average particle size of the synthetic mica powder surface-coated with the silicone binder resin is preferably 100 to 5000 $\mu$m, more preferably 200 to 3000 $\mu$m, further preferably 300 to 2000 $\mu$m, and particularly preferably 400 to 1500 $\mu$m. The synthetic mica powder within the above range is uniformly dispersed in the resin composition, which enables production of a molded article having a good dot-like appearance. Incidentally, the average particle size is measured by a Microtrac laser diffraction method.

The content of (B) synthetic mica powder surface-coated with a silicone binder resin containing a coloring agent (component B) with respect to 100 parts by weight of (A) polycarbonate resin (component A) is 0.01 to 8 parts by weight, preferably 0.1 to 6 parts by weight, more preferably 0.3 to 5 parts by weight, and further preferably 0.5 to 4 parts by weight. The component B with a content less than the lower limit cannot impart a dot-like appearance and that with exceeding the upper limit degrades the color tone and appearance.

The polycarbonate resin composition of the present invention can further contain various dyes/pigments to provide molded articles exhibiting various designabilities. Blending of a fluorescent brightening agent or other light-emitting fluorescent dye can impart a better design effect by making use of the luminescent color. In addition, there can be provided a polycarbonate resin composition which is colored and has vivid color development with a very small amount of dye/pigment.

(Component C: rubber-reinforced styrenic resin)

The rubber-reinforced styrenic resin preferably used in the present invention is a copolymer obtained by copolymerizing an aromatic vinyl compound with one or more selected from other vinyl monomers and rubbery polymers. The proportion of the aromatic vinyl compound in the component is preferably 10% by weight or more, more preferably 30% by weight or more, further preferably 40 to 90% by weight, and particularly preferably 50 to 80% by weight. The proportion of the aromatic vinyl compound is with respect to 100% by weight of the total amount of the C component, and when a plurality of polymers is mixed in the C component, not all the polymers need to satisfy such preferable conditions. However, in any polymer, the proportion of the aromatic vinyl compound is preferably 10% by weight or more. Next, typical monomer compounds contained in the styrenic resin will be explained.

Examples of the aromatic vinyl compound include styrene, α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, and tribromostyrene, and styrene is particularly preferred.

Examples of other vinyl monomer copolymerizable with the aromatic vinyl compound preferably include vinyl cyanide compounds and (meth)acrylic acid ester compounds. Examples of the vinyl cyanide compound include acrylonitrile and methacrylonitrile, and acrylonitrile is particularly preferred.

Specific examples of the (meth)acrylic acid ester compound include methyl (meth)acrylate, ethyl (meth)acrylate, propyl (meth)acrylate, isopropyl (meth)acrylate, butyl (meth)acrylate, amyl (meth)acrylate, hexyl (meth)acrylate, octyl (meth)acrylate, 2-ethylhexyl (meth)acrylate, cyclohexyl (meth)acrylate, dodecyl (meth)acrylate, octadecyl (meth)acrylate, phenyl (meth)acrylate, and benzyl (meth)acrylate. The notation of (meth)acrylate indicates that both methacrylate and acrylate are included, and the notation of (meth)acrylic acid ester indicates that both methacrylic acid ester and acrylic acid ester are included. A particularly preferred (meth)acrylic ester compound is methyl methacrylate.

Examples of other vinyl monomer, copolymerizable with the aromatic vinyl compound, other than the vinyl cyanide compound and the (meth)acrylic acid ester compound include epoxy group-containing methacrylic acid esters such as glycidyl methacrylate, maleimide monomers such as maleimide, N-methylmaleimide, and N-phenylmaleimide, α,β-unsaturated carboxylic acids such as acrylic acid, methacrylic acid, maleic acid, maleic anhydride, phthalic acid and itaconic acid, and their anhydrides.

Examples of the rubbery polymer include polybutadiene, polyisoprene, diene copolymers (e.g., random copolymers and block copolymers of styrene/butadiene, copolymers of acrylonitrile/butadiene, and copolymers of (meth)acrylic acid alkyl esters and butadiene, etc.), copolymers of ethylene and α-olefin (e.g., random copolymers and block copolymers of ethylene/propylene, random copolymers and block copolymers of ethylene/butene, etc.), copolymers of ethylene and unsaturated carboxylic acid esters (e.g., copolymers of ethylene-methacrylate and copolymers of ethylene-butyl acrylate, etc.), copolymers of ethylene and aliphatic vinyl (e.g., copolymers of ethylene/vinyl acetate, etc.), terpolymers of ethylene and propylene and non-conjugated diene (e.g. copolymers of ethylene/propylene/hexadiene, etc.), acrylic rubbers (e.g. polybutyl acrylate, poly(2-ethylhexyl acrylate), and copolymers of butyl acrylate and 2-ethylhexyl acrylate), and silicone rubber (e.g., polyorganosiloxane rubber, IPN type rubber (Interpenetrating Polymer Network: two rubber components are inseparably intertwined) consisting of a polyorganosiloxane rubber component and a polyalkyl (meth)acrylate rubber component, and IPN type rubber consisting of a polyorganosiloxane rubber component and a polyisobutylene rubber component, etc.). Among them, those likely to develop the effect, such as polybutadiene, polyisoprene, and diene copolymers, are more preferable, and polybutadiene is particularly preferable.

Specific examples of the rubber-reinforced styrenic resin include HIPS resin, ABS resin, AES resin, ASA resin, MBS resin, MABS resin, MAS resin, SIS resin, and SBS resin, all of which are readily available. Among them, HIPS resin, ABS resin, AES resin, ASA resin and MBS resin are more preferable.

Among these resins, ABS resin and MBS resin are particularly preferable. ABS resin has excellent formability for thin-walled molded articles and also has good impact resistance. MBS resins also have good impact resistance for thin-walled molded articles. In particular, the resins exhibit favorable properties when combined with an aromatic polycarbonate resin.

Here, AES resin is a copolymer resin mainly composed of acrylonitrile, ethylene-propylene rubber and styrene, ASA resin is a copolymer resin mainly composed of acrylonitrile, styrene and acrylic rubber, MABS resin is a copolymer resin mainly composed of methyl methacrylate, acrylonitrile, butadiene and styrene, MAS resin is a copolymer resin mainly composed of methyl methacrylate, acrylic rubber and styrene, SIS resin is a block copolymer resin (any di-block or higher polymer, and optionally hydrogenated) composed of polystyrene and polyisoprene, and SBS resin is a block copolymer resin (any di-block or higher polymer, and optionally hydrogenated) composed of polystyrene and polybutadiene.

The rubber-reinforced styrenic resin can be used alone or in combination of two or more. For example, a combination of ABS resin and MBS resin is also preferably used in the present invention.

In the ABS resin, the proportion of the diene rubber component with respect to 100% by weight of the ABS resin component (that is, with respect to 100% by weight of the total of ABS polymer and AS polymer) is preferably 5 to 80% by weight, more preferably 7 to 70% by weight, and particularly preferably 10 to 60% by weight.

In the ABS resin, the rubber particle size in weight average particle size is preferably 0.05 to 5 μm, more preferably 0.1 to 2.0 μm, and further preferably 0.1 to 1.5 μm. The resin having rubber particles of unimodal particle size distribution or multimodal particle size distribution with two or more peaks both can be used, and in addition, the particle may have morphology of a single phase or a salami structure by containing occluded phases around the rubber particle.

It is also well known conventionally that ABS resin contains a copolymer of vinyl cyanide compound and aromatic vinyl compound that are not grafted onto a diene rubber component. The ABS resin may contain a free polymer component produced during such polymerization as described above, and may be the one blended with a vinyl compound polymer obtained by separately copolymerizing an aromatic vinyl compound and a vinyl cyanide compound.

Thus, there is included an embodiment of a rubber-reinforced styrenic resin in which a rubber component-containing copolymer and a rubber component-free polymer obtained by separate polymerization are blended. The blending may be performed during production of the resin composition of the present invention, or may be performed prior to blending.

The thermoplastic copolymer (AS copolymer) is produced by copolymerizing a vinyl cyanide compound and an aromatic vinyl compound, wherein examples of the vinyl cyanide compound include those mentioned above, and acrylonitrile is particularly preferably used. Further, examples of the aromatic vinyl compound include those mentioned above, and styrene and α-methylstyrene are preferred. The proportion of each component in the AS copolymer with respect to the total of 100% by weight is, for a vinyl cyanide compound, preferably 5 to 50% by weight and more preferably 15 to 35% by weight, and for an aromatic vinyl compound, preferably 95 to 50% by weight and more preferably 85 to 65% by weight. These vinyl compounds may be further copolymerized with other copolymerizable vinyl compounds mentioned above, and the content thereof is preferably 15% by weight or less with respect to the amount of the AS copolymer. An initiator, a chain transfer agent, and the like to be used in the reaction can be obtained from the various conventionally known ones, and used as necessary.

The AS copolymers may be produced by any method such as bulk polymerization, solution polymerization, suspension polymerization, suspension bulk polymerization, and emulsion polymerization, and bulk polymerization is preferred. The method of copolymerization may be either one-step copolymerization or multi-step copolymerization. The reduced viscosity (30°C) of the AS copolymer is 0.2 to 1.0 dl/g, more preferably 0.3 to 0.7 dl/g, as determined by the method described below.

The reduced viscosity was determined in an environment of 30°C by weighing accurately 0.25 g of the AS copolymer and dissolving it in 50 ml of dimethylformamide over 2 hours, and using an Ubbelohde's viscometer. A viscometer with a solvent fall time of 20 to 100 seconds is used. The reduced viscosity is obtained by the following formula from the solvent fall time in second ($t_0$) and the solution fall time in second (t).

$$\text{Reduced viscosity } (\eta_{sp}/C) = \{(t/t_0)-1\}/0.5$$

The proportion of the free polymer component in the AS copolymer can be obtained by dissolving the ABS copolymer in a good solvent for the AS copolymer such as acetone and extracting the soluble part, from which the proportion is determined. On the other hand, the insoluble part (gel) becomes the net ABS copolymer.

The proportion of the vinyl cyanide compound and the aromatic vinyl compound grafted to the diene rubber component in the ABS copolymer (the proportion of the weight of the graft component with respect to the weight of the diene rubber component), that is, the graft rate (% by weight) is preferably 20 to 200% and more preferably 20 to 80%.

The ABS resin may be produced by any method such as bulk polymerization, solution polymerization, suspension polymerization, and emulsion polymerization. More preferred is ABS resin produced by bulk polymerization. Further, the typical examples of the bulk polymerization method include a continuous bulk polymerization method (so-called Toray method) described in Kagaku Kogaku Vol. 48, No. 6, p. 415 (1984), and a continuous bulk polymerization method (so-called Mitsui Toatsu method) described in Kagaku Kogaku Vol. 53, No. 6, p. 423 (1989). ABS resin produced by any method is preferably used as ABS resin. In addition, the copolymerization may be carried out in one step or in multiple steps.

The proportion of the diene rubber component with respect to 100% by weight of the MBS resin component is preferably 30 to 90% by weight, more preferably 40 to 85% by weight, and particularly preferably 50 to 80% by weight.

The MBS resin preferably has a rubber particle size in weight average particle size of 0.05 to 2 μm, more

preferably 0.1 to 1.0 μm, and further preferably 0.1 to 0.5 μm. The resin having rubber particles of unimodal particle size distribution or multimodal particle size distribution with two or more peaks both can be used. The MBS resin produced by emulsion polymerization is preferably used.

The content of (C) rubber-reinforced styrenic resin (component C) with respect to 100 parts by weight of (A) polycarbonate resin (component A) is preferably 1 to 100 parts by weight, more preferably 5 to 80 parts by weight, further preferably 10 to 50 parts by weight, and particularly preferably 15 to 40 parts by weight. The rubber-reinforced styrenic resin with a content within the above range can impart good impact resistance and excellent formability.

(Component D: Inorganic filler other than synthetic mica powder)

Inorganic fillers other than synthetic mica powder can be preferably used in the present invention. Examples of the inorganic filler include talc, wollastonite, calcium carbonate, glass fibers, glass beads, glass balloons, glass milled fibers, glass flakes, carbon fibers, carbon flakes, carbon beads, carbon milled fibers, graphite, carbon nanotubes, metal flakes, metal fibers, metal-coated glass fibers, metal-coated carbon fibers, metal-coated glass flakes, silica, metal oxide particles, metal oxide fibers, metal oxide balloons, and various whiskers (potassium titanate whiskers, aluminum borate whiskers, and basic magnesium sulfate, etc.). Among them, at least one inorganic filler selected from the group consisting of talc and wollastonite is preferably used in terms of mechanical strength and appearance of molded articles.

Talc is a hydrated magnesium silicate in terms of its chemical composition, generally represented by the chemical formula $4SiO_2 \cdot 3MgO \cdot 2H_2O$, and is normally scaly particles having a layered structure, and composed of about 56 to 65% by weight of $SiO_2$, 28 to 35% by weight of MgO, and about 5% by weight of $H_2O$. Other minor components include 0.03 to 1.2% by weight of $Fe_2O_3$, 0.05 to 1.5% by weight of $Al_2O_3$, 0.05 to 1.2% by weight of CaO, 0.2% by weight or less of $K_2O$, and 0.2% by weight or less of $Na_2O$. Talc has an average particle size, as measured by a sedimentation method, preferably in the range of 0.1 to 15 μm (more preferably 0.2 to 12 μm, further preferably 0.3 to 10 μm, and particularly preferably 0.5 to 5 μm). Further, talc having a bulk density of 0.5 (g/cm$^3$) or more is particularly preferably used as a raw material. The average particle size of talc refers to D50 (median size of particle size distribution) measured by an X-ray transmission method, one of the liquid phase sedimentation methods. Specific examples of the apparatus for performing the measurement include Sedigraph 5100 manufactured by Micromeritics.

In addition, the manufacturing method for grinding talc from raw ore is not particularly limited, and there can be used methods such as axial flow milling, annular milling, roll milling, ball milling, jet milling, and container rotating compression shearing milling. Further, the talc after pulverization is preferably classified by various classifiers to have a uniform particle size distribution. The classifiers are not particularly limited, and examples thereof include impactor type inertial force classifiers (variable impactor, etc.), Coanda effect type inertial force classifiers (elbow jet, etc.), and centrifugal field classifiers (multistage cyclone, microplex, dispersion separator, AccuCut, Turbo Classifier, Turboplex, Micron Separator, Super Separator, etc.). Further, talc is preferably in an agglomerated state from the viewpoint of ease of handling, etc. Examples of the production method include a deaeration compression method and a compression method using a sizing agent. In particular, the deaeration compression method is simple and does not mix unnecessary sizing agent resin components into the resin composition of the present invention, and is thus preferable.

Wollastonite has a fiber diameter of preferably 0.1 to 10 μm, more preferably 0.1 to 5 μm, and further preferably 0.1 to 3 μm. The aspect ratio (average fiber length/average fiber diameter) is preferably 3 or more. The upper limit of the aspect ratio is, for example, 30 or less. Here, the fiber diameter is obtained by observing the reinforcing filler with an electron microscope, measuring the individual fiber diameter, and calculating the number average fiber diameter from the measured values. An electron microscope is used because an optical microscope is hardly used to accurately measure the level of the target size. The fiber diameter is obtained by randomly selecting fillers for measurement from the image obtained through observation by the electron microscope, measuring the fiber diameter near the center, and calculating the number average fiber diameter from the measured values. The magnification of observation is about 1000 times, and the number of fibers to be measured is 500 or more (600 or less is preferable for workload). On the other hand, the average fiber length is obtained by observing the filler with an optical microscope, measuring the individual length, and calculating the number average fiber length from the measured values. Observation with an optical microscope begins with preparation of a sample by dispersing fillers not to overlap each other too much. Observation is performed under the condition of an objective lens at 20 times, and the observed image is captured as image data by a CCD camera having about 250,000 pixels. The obtained image data is processed using an image analyzer and a program for determining the maximum distance between two points in the image data to calculate the fiber length. The size of one pixel corresponds to a length of 1.25 μm under these conditions, and the number of fibers to be measured is 500 or more (600 or less is preferable for workload).

In order for wollastonite to fully reflect the inherent whiteness to the resin composition, the iron content, mixed in from the raw material ore and from the process of crushing the raw material ore due to the abrasion of the equipment, is preferably removed as much as possible by a magnetic separator. The content of iron (in terms of $Fe_2O_3$) in wollastonite treated by the magnetic separation is preferably 0.5% by weight or less.

Silicate minerals (more preferably, mica, talc, or wollastonite) are preferably not surface-treated, but may be surface-treated with various surface treatment agents such as a silane coupling agent, a higher fatty acid ester, and wax. Further, it may be granulated by granulating with a sizing agent such as various resins, a higher fatty acid ester, and wax.

The content of (D) inorganic filler other than synthetic mica powder (D component) with respect to 100 parts by weight of (A) polycarbonate resin (component A) is preferably 1 to 100 parts by weight, more preferably 5 to 80 parts by weight, further preferably 10 to 60 parts by weight, and particularly preferably 20 to 50 parts by weight. The inorganic filler other than the synthetic mica powder with a content within the above range can impart good mechanical properties and molded article appearance.

(Component E: flame retardant)

A flame retardant can be preferably used in the present invention. The flame retardant includes those known to impart flame retardancy to aromatic polycarbonates such as a phosphoric acid ester, a sulfonic acid alkali (earth) metal salt, and a silicone compound.

The phosphoric acid ester used as the flame retardant includes various phosphoric acid esters that are known to exhibit flame retardancy to aromatic polycarbonates. Among them, more preferred are those represented by the following general formula (III). In general formula (III) below, the aryl group refers to a residue obtained by removing one hydrogen atom from the benzene ring of an aromatic compound. Preferred is a residue obtained by removing one hydrogen atom from the benzene ring of the aromatic hydrocarbon. Examples of the aryl group include phenyl, tolyl, xylyl, biphenylyl, and naphthyl groups.

[Chem. 1]

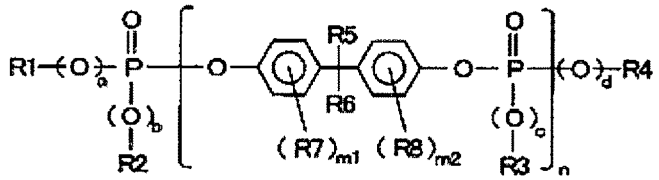

(III)

(Wherein, R1, R2, R3 and R4 are each independently an aryl group having 6 to 12 carbon atoms, R5 and R6 are each independently a methyl group or a hydrogen atom, R7 and R8 represent a methyl group, m1 and m2 each independently represent an integer of 0 to 2, a, b, c and d are each independently 0 or 1, and n is an integer of 1 to 5.)

In an embodiment of the phosphoric acid ester, preferably in general formula (III), m1 and m2 are 0, a, b, c, and d are 1, R1, R2, R3, and R4 are phenyl groups, and R5 and R6 are methyl groups. Since the phosphoric acid ester containing bisphenol A bis(diphenyl phosphate) as a main component has a high phosphorus content, the resin composition containing it has good flame retardancy and also good fluidity during molding. Further, since such a phosphoric acid ester has good hydrolysis resistance due to its structure, a resin composition containing it is excellent in long-term quality retention.

A phosphoric acid ester more preferable as a flame retardant is a phosphoric acid ester compound represented by the above general formula (III) having an acid value of 0.2 mgKOH/g or less, wherein the content of a phosphoric acid ester compound represented by the following general formula (IV) (hereinafter, may be referred to as "half ester") is 1.5% by weight or less.

[Chem. 2]

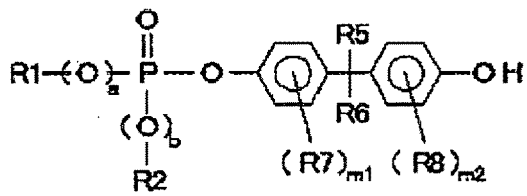

(IV)

(Wherein, R1 and R2 are each independently an aryl group having 6 to 12 carbon atoms, R5 and R6 are each

independently a methyl group or a hydrogen atom, R7 and R8 represent a methyl group, m1 and m2 each independently represent an integer of 0 to 2, and a and b are each independently 0 or 1.)

The acid value of the phosphoric acid ester is more preferably 0.15 mgKOH/g or less, further preferably 0.1 mgKOH/g or less, and particularly preferably 0.05 mgKOH/g or less. The lower limit of the acid value can be substantially 0, and practically it is preferably 0.01 mgKOH/g or more. On the other hand, the half ester content is more preferably 1.1% by weight or less, and further preferably 0.9% by weight or less. Practically, the lower limit is preferably 0.1% by weight or more, and more preferably 0.2% by weight or more. The phosphoric acid ester with the acid value exceeding 0.2 mgKOH/g or with the half ester content exceeding 1.5% by weight degrades the thermal stability during molding, and lowers the hydrolysis resistance of the resin composition due to the decomposition of the aromatic polycarbonate.

The proportion of phosphoric acid ester component, with respect to the total amount of 100% by weight, corresponding to the condensation degree is, for n=0, preferably 0.1 to 3% by weight and more preferably 0.5 to 2.5% by weight, for n=1, preferably 85 to 98.5% by weight and more preferably 89.5 to 98.5% by weight, for n=2, preferably 1 to 9% by weight and more preferably 1 to 7% by weight, and for n≥3 preferably 1. 5% by weight or less and more preferably 1% by weight or less; and the weight average condensation degree N, calculated excluding the component with n = 0, is 1.01 to 1.10, preferably 1.01 to 1.09, and more preferably 1.01 to 1.07. The B component having such a distribution imparts an excellent compatibility between heat resistance and impact resistance to the resin composition. Note that each of the above n components refers to components synthesized from predetermined dihydric phenols and monohydric phenols, and does not include reaction by-products and the like. For example, when phenol is used as the monohydric phenol, the component of n=0 is triphenyl phosphate.

The sulfonic acid alkali (earth) metal salt used as a flame retardant is a metal salt of perfluoroalkylsulfonic acid and an alkali metal or alkaline earth metal, or a metal salt of an aromatic sulfonic acid and an alkali metal or alkaline earth metal.

Examples of the alkali metal constituting the metal salt include lithium, sodium, potassium, rubidium and cesium, and examples of the alkaline earth metal include beryllium, magnesium, calcium, strontium, and barium. Alkali metals are more preferred. Among such alkali metals, rubidium and cesium are preferable when transparency is highly demanded, but they are not versatile and are difficult to purify, and as a result may be disadvantageous in terms of cost. On the other hand, although lithium and sodium are advantageous in terms of cost and flame retardancy, they may be disadvantageous in terms of transparency. Although the alkali metal in the sulfonic acid alkali metal salt can be properly selected and used in consideration of these factors, the sulfonic acid potassium salt is most preferable because of its well-balanced properties in all respects. The potassium salt and sulfonic acid alkali metal salts of other alkali metals can also be used in combination.

Specific examples of the perfluoroalkylsulfonic acid alkali metal salt include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate, and rubidium perfluorohexanesulfonate, and these can be used alone or in combination of two or more. The perfluoroalkyl group preferably has 1 to 18 carbon atoms, more preferably 1 to 10 carbon atoms, and further preferably 1 to 8 carbon atoms. Among them, potassium perfluorobutanesulfonate is particularly preferred.

Specific examples of the aromatic sulfonic acid alkali (earth) metal salt include disodium diphenylsulfide-4,4'-disulfonate, dipotassium diphenylsulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecylphenyl ether disulfonate, poly(2,6-dimethylphenylene oxide) polysodium polysulfonate, poly(1,3-phenylene oxide) polysodium polysulfonate, poly(1,4-phenylene oxide) polysodium polysulfonate, poly(2,6-diphenylphenylene oxide) polypotassium polysulfonate, poly(2-fluoro-6-butylphenylene oxide) lithium polysulfonate, potassium sulfonate of benzenesulfonate, sodium benzenesulfonate, strontium benzenesulfonate, magnesium benzenesulfonate, dipotassium p-benzenedisulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium $\alpha,\alpha,\alpha$-trifluoroacetophenone-4-sulfonate, dipotassium benzophenone-3,3'-sulfonate, disodium thiophene-2,5-disulfonate, dipotassium thiophene-2,5-disulfonate, calcium thiophene-2,5-disulfonate, sodium benzothiophene sulfonate, potassium diphenyl sulfoxide-4-sulfonate, formalin condensate of sodium naphthalene sulfonate, and formalin condensate of sodium anthracene sulfonate. Among these aromatic sulfonic acid alkali (earth) metal salts, potassium salts are particularly preferred.

Silicone compounds used as flame retardants are compounds having siloxane bonds and improve flame retardancy through chemical reactions during combustion, and thus there can be used those various compounds conventionally proposed as flame retardants for aromatic polycarbonate resins. The silicone compound imparts a flame-retardant effect to the polycarbonate resin conceivably by forming a structure during combustion by binding with itself or by combining with a component derived from the resin, or by a reduction reaction during the formation of the structure.

Therefore, the compound preferably contains a group highly active in such reactions, and more specifically, preferably contains a predetermined amount of at least one group selected from an alkoxy group and hydrogen (that is, Si-H group). The content of the group (alkoxy group, Si-H group) is preferably in the range of 0.1 to 1.2 mol/100 g, more preferably in the range of 0.12 to 1 mol/100 g, and further preferably 0.15 to 0.6 mol/100 g. The content can be determined by measuring the amount of hydrogen or alcohol generated per unit weight of the silicone compound by the alkaline decomposition method. The alkoxy group having 1 to 4 carbon atoms is preferable, and a methoxy group is particularly preferable.

Generally, the structure of a silicone compound is constructed by arbitrarily combining the four types of siloxane units shown below. That is,

M unit: a monofunctional siloxane unit such as $(CH_3)_3SiO_{1/2}$, $H(CH_3)_2SiO_{1/2}$, $H_2(CH_3)SiO_{1/2}$, $(CH_3)_2(CH_2=CH)SiO_{1/2}$, $(CH_3)_2(C_6H_5)SiO_{1/2}$, $(CH_3)(C_6H_5)(CH_2=CH)SiO_{1/2}$, etc.,
D unit: a difunctional siloxane unit such as $(CH_3)_2SiO$, $H(CH_3)SiO$, $H_2SiO$, $H(C_6H_5)SiO$, $(CH_3)(CH_2=CH)SiO$, $(C_6H_5)_2SiO$, etc.,
T unit: a trifunctional siloxane unit such as $(CH_3)SiO_{3/2}$, $(C_3H_7)SiO_{3/2}$, $HSiO_{3/2}$, $(CH_2=CH)SiO_{3/2}$, $(C_6H_5)SiO_{3/2}$, etc.,
O unit: a quadrafunctional siloxane unit represented by $SiO_2$.

Specific examples in rational formula of the structure of the silicone compound include $D_n$, $T_p$, $M_mD_n$, $M_mT_p$, $M_mQ_q$, $M_mD_nT_p$, $M_mD_nQ_q$, $M_mT_pQ_q$, $M_mD_nT_pQ_q$, $D_nT_p$, $D_nQ_q$, and $D_nT_pQ_q$. Among them, preferred structures of the silicone compound are $M_mD_n$, $M_mT_p$, $M_mD_nT_p$, and $M_mD_nQ_q$, and more preferred structures are $M_mD_n$ and $M_mD_nT_p$.

Here, the coefficients m, n, p, and q in the rational formula represent the degree of polymerization of each siloxane unit and integers of 1 or more, and the sum of the coefficients in each rational formula is the average degree of polymerization of the silicone compound. The average degree of polymerization is preferably in the range of 3 to 150, more preferably in the range of 3 to 80, further preferably in the range of 3 to 60, and most preferably in the range of 4 to 40. The more preferable range the compound is in, the better flame retardancy it exhibits. As will be further described later, in the case of silicone compounds containing a predetermined amount of aromatic group, excellent transparency is exhibited as well. When any of m, n, p, and q has a numerical value of 2 or more, the siloxane unit subscripted with that coefficient can be two or more types of siloxane unit having difference in bonding hydrogen atoms or organic residues.

Further, the silicone compound may be linear or branched. In addition, the organic residue bonding to the silicon atom has preferably 1 to 30 carbon atoms, and more preferably 1 to 20 carbon atoms. Specific examples of the organic residue include alkyl group such as methyl group, ethyl group, propyl group, butyl group, hexyl group and decyl group; cycloalkyl group such as cyclohexyl group; and aryl group such as phenyl group and tolyl group, and aralkyl group. The residue is more preferably an alkyl group, alkenyl group having 1 to 8 carbon atoms or aryl group. The alkyl group is particularly preferably an alkyl group having 1 to 4 carbon atoms such as methyl group, ethyl group and propyl group.

Further, blending aryl group to the silicone compound is preferable in that there can be provided an aromatic polycarbonate resin composition having excellent flame retardancy and transparency. An aromatic group represented by the following general formula (V) is more preferably blended, and the content of the aromatic group (aromatic group amount) is preferably 10 to 70% by weight (more preferably 15 to 60% by weight).

[Chem. 3]

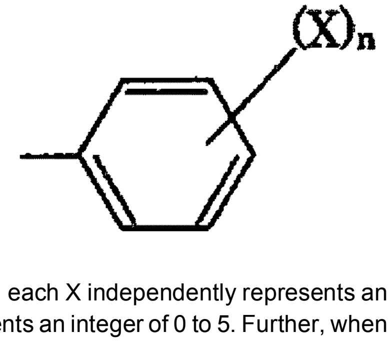

(V)

(In formula (V), each X independently represents an OH group or a monovalent organic residue having 1 to 20 carbon atoms. n represents an integer of 0 to 5. Further, when n is 2 or more in formula (V), different types of X can exist.)

The silicone compound may contain reactive groups other than the Si-H group and alkoxy group. Examples of the reactive group include amino group, carboxyl group, epoxy group, vinyl group, mercapto group, and methacryloxy group.

The content of (E) flame retardant (E component) with respect to 100 parts by weight of (A) polycarbonate resin (A component) is preferably 1 to 100 parts by weight, more preferably 5 to 70 parts by weight, further preferably 10 to

50 parts by weight, and particularly preferably 20 to 40 parts by weight. The flame retardant with a content within the above range can impart good flame retardancy and mechanical properties.

(Component F: anti-dripping agent)

The polycarbonate resin composition of the present invention can contain an anti-dripping agent as F component. Blending the anti-dripping agent facilitates achieving good flame retardancy without impairing the physical properties of the molded article.

Examples of the anti-dripping agent include fluorine-containing polymers having fibril-forming ability, and specifically polytetrafluoroethylene, a tetrafluoroethylene copolymer (e.g., tetrafluoroethylene/hexafluoropropylene copolymer, etc.), a partially fluorinated polymer as shown in US Pat. No. 4,379,910, and a polycarbonate resin produced from fluorinated diphenol. Among them, polytetrafluoroethylene (hereinafter may be referred to as PTFE) is preferred.

The PTFE having fibril-forming ability has an extremely high molecular weight, and exhibits a tendency to bond each other among PTFEs to become fibrous by an external action such as shearing force. The molecular weight is 1,000,000 to 10,000,000 and more preferably 2,000,000 to 9,000,000 in terms of number average molecular weight determined from standard specific gravity. The PTFE can be used not only in a solid form but also in an aqueous dispersion form. In addition, the PTFE having fibril-forming ability can be used as a PTFE mixture mixed with other resins to improve dispersibility in resin, and to further gain good flame retardancy and mechanical properties.

Examples of the commercially available PTFE having fibril-forming ability include Teflon (registered trademark) 6J manufactured by DuPont-Mitsui Fluorochemical Co., Ltd., Polyflon MPA FA500 and F-201L manufactured by Daikin Industries, Ltd. Examples of the commercially available PTFE aqueous dispersion include Fluon AD-1 and AD-936 manufactured by Asahi-ICI Fluoropolymers Co., Ltd., Fluon D-1 and D-2 manufactured by Daikin Industries, Ltd., and Teflon (registered trademark) 30J manufactured by DuPont-Mitsui Fluorochemical Co., Ltd. as representatives.

There can be used mixed PTFE obtained by the following methods: (1) a method of mixing an aqueous dispersion of PTFE and an aqueous dispersion or solution of an organic polymer to effect coprecipitation to obtain a coaggregated mixture (method described in JP-A-60-258263, JP-A-63-154744, etc.), (2) a method of mixing an aqueous dispersion of PTFE and dried organic polymer particles (method described in JP-A-4-272957), (3) a method of uniformly mixing an aqueous dispersion of PTFE and a solution of organic polymer particles and simultaneously removing the respective media from the mixture (see JP-A-06-220210, JP-A-08-188653, etc.), (4) a method of polymerizing a monomer that forms an organic polymer in an aqueous dispersion of PTFE (method described in JP-A-9-95583), and (5) a method of uniformly mixing an aqueous dispersion of PTFE and an organic polymer dispersion, further polymerizing a vinyl monomer in the mixed dispersion, and then obtaining a mixture (method described in JP-A-11-29679, etc.). Examples of commercially available products of these mixed forms of PTFE include "METABLEN A3800" (trade name) manufactured by Mitsubishi Rayon Co., Ltd., and "BLENDEX B449" (trade name) manufactured by GE Specialty Chemicals.

The proportion of PTFE in the mixed form with respect to 100% by weight of the PTFE mixture is preferably 1 to 60% by weight and more preferably 5 to 55% by weight. The PTFE mixture with a proportion of PTFE in this range can achieve good dispersibility of PTFE. The proportion for the F component indicates the net amount of the anti-dripping agent, and for mixed PTFE, indicates the net amount of PTFE.

The content of (F) anti-dripping agent (F component) with respect to 100 parts by weight of (A) polycarbonate resin (A component) is preferably 0.01 to 10 parts by weight, more preferably 0.1 to 5 parts by weight, further preferably 0.3 to 3 parts by weight, and particularly preferably 0.5 to 2 parts by weight. The anti-dripping agent with a content within the above range can impart excellent flame retardancy and good surface appearance to the molded article.

In addition, examples of the styrenic monomer used in the organic polymer which is blended in the polytetrafluoroethylene mixture include, though not limited to the followings, styrene optionally substituted with one or more groups selected from the group consisting of an alkyl group having 1 to 6 carbon atoms, an alkoxy group having 1 to 6 carbon atoms, and halogen, such as ortho-methylstyrene, meta-methylstyrene, para-methylstyrene, dimethylstyrene, ethylstyrene, para-tert-butylstyrene, methoxystyrene, fluorostyrene, monobromostyrene, dibromostyrene, and tribromostyrene; vinylxylene, and vinylnaphthalene. The styrenic monomers may be used alone or in combination of two or more.

Acrylic monomers used in the organic polymer which is blended in the polytetrafluoroethylene mixtures include optionally substituted (meth)acrylate derivatives. Specifically, the acrylic monomer includes, though not limited to the followings, (meth)acrylate derivative, optionally substituted with one or more groups selected from the group consisting of an alkyl group having 1 to 20 carbon atoms, a cycloalkyl group having 3 to 8 carbon atoms, an aryl group, and a glycidyl group, such as (meth)acrylonitrile, methyl (meth)acrylate, ethyl (meth)acrylate, propyl (meth)acrylate, butyl (meth)acrylate, amyl (meth)acrylate, hexyl (meth)acrylate, 2-ethylhexyl (meth)acrylate, cyclohexyl (meth)acrylate, octyl (meth)acrylate, dodecyl (meth)acrylate, phenyl (meth)acrylate, benzyl (meth)acrylate and glycidyl (meth)acrylate; maleimide optionally substituted with an alkyl group having 1 to 6 carbon atoms or an aryl group, such as maleimide, N-methyl-maleimide and N-phenyl-maleimide; maleic acid, phthalic acid, and itaconic acid. The acrylic monomers may be used alone or in combination of two or more. Among them, (meth)acrylonitrile is preferred.

The amount of the acrylic monomer-derived units contained in the organic polymer used in the coating layer, with respect to 100 parts by weight of the styrenic monomer-derived unit, is preferably 8 to 11 parts by weight, more preferably 8 to 10 parts by weight, and further preferably 8 to 9 parts by weight. The organic polymer with the acrylic monomer-derived unit less than 8 parts by weight may lower the coating strength and with that more than 11 parts by weight may degrade the surface appearance of the molded article.

The polytetrafluoroethylene mixture preferably has a residual moisture content of 0.5% by weight or less, more preferably 0.2 to 0.4% by weight, and further preferably 0.1 to 0.3% by weight. The residual water content more than 0.5% by weight may adversely affect flame retardancy.

The process of producing a polytetrafluoroethylene mixture includes a step of forming a coating layer outside the branched polytetrafluoroethylene in the presence of an initiator, wherein the coating layer contains one or more monomers selected from the group consisting of a styrenic monomer and an acrylic monomer. Further, after the step of forming the coating layer, the process preferably includes a step of drying, which gives a residual moisture content of 0.5 % by weight or less, preferably 0.2 to 0.4 % by weight, and more preferably 0.1 to 0.3 % by weight. The step of drying can be performed using methods known in the art such as, for example, a hot air drying or vacuum drying method.

The initiator, as long as the one used for a polymerization reaction of styrenic and/or acrylic monomers, can be used for the polytetrafluoroethylene mixture without any limitation. Examples of the initiator include, though not limited to, cumyl hydroperoxide, di-tert-butyl peroxide, benzoyl peroxide, hydrogen peroxide, and potassium peroxide. The polytetrafluoroethylene mixture of the present invention allows use of one or more of the above initiators depending on the reaction conditions. The amount of the initiator is freely selected within the range allowed in consideration of the amount of polytetrafluoroethylene and the type/amount of the monomer, and is preferably 0.15 to 0.25 parts by weight with respect to the amount of the total composition.

In addition, coated branched PTFE can also be used as an anti-dripping agent. The coated branched PTFE is a polytetrafluoroethylene mixture composed of branched polytetrafluoroethylene particles and an organic polymer, and has the organic polymer, preferably a coating layer composed of a polymer containing styrenic monomer-derived units and/or acrylic monomer-derived units, outside the branched polytetrafluoroethylene. The coating layer is formed on the surface of branched polytetrafluoroethylene. In addition, the coating layer preferably contains a copolymer of styrenic monomer and acrylic monomer.

The polytetrafluoroethylene contained in the coated branched PTFE is branched polytetrafluoroethylene. Containing unbranched polytetrafluoroethylene instead of branched polytetrafluoroethylene causes insufficient anti-dripping effect when the added amount of polytetrafluoroethylene is small. The branched polytetrafluoroethylene is particulate and preferably has a particle size of 0.1 to 0.6 μm, more preferably 0.3 to 0.5 μm, and further preferably 0.3 to 0.4 μm. The branched polytetrafluoroethylene with a particle size smaller than 0.1 μm can impart an excellent surface appearance to molded articles, but is hardly commercially available. Further, the branched polytetrafluoroethylene with a particle size larger than 0.6 μm may degrade the surface appearance of the molded article. The polytetrafluoroethylene used in the present invention preferably has a number average molecular weight of $1\times10^4$ to $1\times10^7$ and more preferably $2\times10^6$ to $9\times10^6$, and polytetrafluoroethylene with high molecular weight is generally more preferred in terms of stability. Either form of powder or dispersion can be used. The content of the branched polytetrafluoroethylene in the coated branched PTFE with respect to 100 parts by weight of the total weight of the coated branched PTFE is preferably 20 to 60 parts by weight, more preferably 40 to 55 parts by weight, further preferably 47 to 53 parts by weight, particularly preferably 48 to 52 parts by weight, and most preferably 49 to 51 parts by weight. The branched polytetrafluoroethylene with a proportion within this range can achieve good dispersibility of branched polytetrafluoroethylene.

(Component G: Release agent)

A release agent can be preferably used in the present invention. The polycarbonate resin composition of the present invention preferably further contains a release agent for the purpose of improving productivity during molding and reducing distortion of molded articles. Those known as release agents can be used for the release agent. For example, there are included saturated fatty acid ester, unsaturated fatty acid ester, polyolefin wax (those modified with functional group-containing compounds such as acid-modified compound can also be used: polyethylene wax, 1-alkene polymer, etc.), silicone compounds, fluorine compounds (such as fluorine oils represented by polyfluoroalkyl ethers), paraffin wax, and beeswax.

Among them, preferred release agents include fatty acid esters. The fatty acid ester is an ester of an aliphatic alcohol and an aliphatic carboxylic acid. The aliphatic alcohol may be monohydric alcohol or polyhydric alcohols of dihydric or higher. The number of carbon atoms in the alcohol is in the range of 3 to 32, and more preferably in the range of 5 to 30. Examples of the monohydric alcohol include dodecanol, tetradecanol, hexadecanol, octadecanol, eicosanol, tetracosanol, ceryl alcohol, and triacontanol. Examples of the polyhydric alcohol include pentaerythritol, dipentaerythritol, tripentaerythritol, polyglycerol (triglycerol to hexaglycerol), ditrimethylolpropane, xylitol, sorbitol, and mannitol. Polyhydric alcohols are more preferred in the fatty acid ester of the present invention.

On the other hand, the aliphatic carboxylic acid preferably has 3 to 32 carbon atoms, and more preferably 10 to 22 carbon atoms. Examples of the aliphatic carboxylic acid include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, behenic acid, icosanoic acid, and docosanoic acid, and unsaturated aliphatic carboxylic acids such as palmitoleic acid, oleic acid, linoleic acid, linolenic acid, eicosenoic acid, eicosapentaenoic acid, and cetoleic acid. Among the above, the aliphatic carboxylic acid preferably has 14 to 20 carbon atoms. Among them, saturated aliphatic carboxylic acids are preferred. Stearic acid and palmitic acid are particularly preferred.

The above-mentioned aliphatic carboxylic acids such as stearic acid and palmitic acid are usually produced from natural fats and oils including animal oils and fats such as beef tallow and lard, and vegetable oils and fats such as palm oil and sunflower oil, and thus are usually mixtures containing other carboxylic acid components with different number of carbon atoms. Therefore, in the production of the fatty acid ester of the present invention, aliphatic carboxylic acids, especially stearic acid and palmitic acid, which are produced from the natural fats and oils and are in the form of mixtures containing other carboxylic acid components, are preferably used.

The fatty acid ester may be either partial esters or total esters (full esters). However, since partial esters usually have a high hydroxyl value and tend to induce decomposition of the resin at high temperatures, full esters are more preferable. The acid value of the fatty acid ester is preferably 20 or less, more preferably in the range of 4 to 20, and further preferably in the range of 4 to 12, from the viewpoint of thermal stability. Incidentally, the acid value can be substantially zero. Further, the hydroxyl value of the fatty acid ester is more preferably in the range of 0.1 to 30. Further, the iodine value is preferably 10 or less. Incidentally, the iodine value can be substantially zero. These properties can be determined by the method specified in JIS K 0070.

The content of (G) release agent (component G) with respect to 100 parts by weight of (A) polycarbonate resin (component A) is preferably 0.01 to 10 parts by weight, more preferably 0.05 to 5 parts by weight, further preferably 0.1 to 4 parts by weight, and particularly preferably 0.5 to 3 parts by weight. The release agent with a content within the above range can impart excellent releasability during molding and good surface appearance to the molded article.

(Other additives)

(i) Phosphorus stabilizer

The resin composition of the present invention can contain a phosphorus stabilizer. Examples of the phosphorus stabilizer include phosphorous acid, phosphoric acid, phosphonous acid, phosphonic acid and their esters, and tertiary phosphine.

Specific examples of phosphite compounds include triphenylphosphite, tris(nonylphenyl)phosphite, tridecylphosphite, trioctylphosphite, trioctadecylphosphite, didecylmonophenylphosphite, dioctylmonophenylphosphite, diisopropylmonophenylphosphite, monobutyldiphenylphosphite, monodecyldiphenylphosphite, monooctyldiphenylphosphite, tris(diethylphenyl)phosphite, tris(di-iso-propylphenyl)phosphite, tris(di-n-butylphenyl)phosphite, tris(2,4-di-tert-butylphenyl)phosphite, tris(2,6-di-tert-butylphenyl)phosphite, distearylpentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis{2,4-bis(1-methyl-1-phenylethyl)phenyl}pentaerythritol diphosphite, phenylbisphenol A pentaerythritol diphosphite, bis(nonylphenyl)pentaerythritol diphosphite, and dicyclohexylpentaerythritol diphosphite.

Further, there can also be used other phosphite compounds of those having a cyclic structure by reacting with dihydric phenols. Examples thereof include 2,2'-methylenebis(4,6-di-tert-butylphenyl)(2,4-di-tert-butylphenyl)phosphite, 2,2'-methylenebis(4,6-di-tert-butylphenyl)(2-tert-butyl-4-methylphenyl)phosphite and 2,2-methylenebis(4,6-di-tert-butylphenyl)octylphosphite.

Examples of phosphate compounds include tributyl phosphate, trimethyl phosphate, tricresyl phosphate, triphenyl phosphate, trichlorophenyl phosphate, triethyl phosphate, diphenyl cresyl phosphate, diphenyl monoorthoxenyl phosphate, tributoxyethyl phosphate, dibutyl phosphate, dioctyl phosphate, and diisopropyl phosphate, and triphenyl phosphate and trimethyl phosphate are preferred.

Examples of phosphonite compounds include tetrakis(2,4-di-tert-butylphenyl)-4,4'-biphenylenediphosphonite, tetrakis(2,4-di-tert-butylphenyl)-4,3'-biphenylenediphosphonite, tetrakis(2,4-di-tert-butylphenyl)-3,3'-biphenylenediphosphonite, tetrakis(2,6-di-tert-butylphenyl)-4,4'-biphenylenediphosphonite, tetrakis(2,6-di-tert-butylphenyl)-4,3'-biphenylenediphosphonite, tetrakis(2,6-di-tert-butylphenyl)-3,3'-biphenylenediphosphonite, bis(2,4-di-tert-butylphenyl)-4-phenyl-phenylphosphonite, bis(2,4-di-tert-butylphenyl)-3-phenyl-phenylphosphonite, bis(2,6-di-n-butylphenyl)-3-phenyl-phenylphosphonite, bis(2,6-di-tert-butylphenyl)-4-phenyl-phenylphosphonite, and bis(2,6-di-tert-butylphenyl)-3-phenyl-phenylphosphonite, preferably tetrakis(di-tert-butylphenyl)-biphenylenediphosphonite, bis(di-tert-butylphenyl)-phenyl-phenylphosphonite, and more preferably tetrakis(2,4-di-tert-butylphenyl)-biphenylenediphosphonite and bis(2,4-di-tert-butylphenyl)-phenyl-phenylphosphonite. The phosphonite compound can be used in combination with the above-mentioned phosphite compound having an aryl group substituted with two or more alkyl groups, which is preferable.

Examples of phosphonate compounds include dimethyl benzenephosphonate, diethyl benzenephosphonate, and dipropyl benzenephosphonate.

Examples of the tertiary phosphines include triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tri-p-tolylphosphine, trinaphthylphosphine, and diphenylbenzylphosphine. A particularly preferred tertiary phosphine is triphenylphosphine.

Tetrakis(2,4-di-tert-butylphenyl)-biphenylenediphosphonite is preferable in the phosphonite compound, and the phosphonite-based stabilizers are commercially available as Sandostab P-EPQ (trademark, manufactured by Clariant) and Irgafos P-EPQ (trademark, manufactured by CIBA SPECIALTY CHEMICALS), any of which can be used.

In addition, more preferred phosphite compounds are distearylpentaerythritol diphosphite, bis(2,4-di-tert-butylphenyl)pentaerythritol diphosphite, bis(2,6-di-tert-butyl-4-methylphenyl)pentaerythritol diphosphite and bis{2,4-bis(1-methyl-1-phenylethyl)phenyl }pentaerythritol diphosphite.

Distearylpentaerythritol diphosphite is commercially available as ADK STAB PEP-8 (trademark, manufactured by Asahi Denka Co., Ltd.) and JPP681S (trademark, manufactured by Johoku Chemical Co., Ltd.), any of which can be used. Bis(2,4-di-tert-butylphenyl)pentaerythritol diphosphite is commercially available as ADK STAB PEP-24G (trademark, manufactured by Asahi Denka Co., Ltd.), Alkanox P-24 (trademark, manufactured by Great Lakes Chemical Corp.), Ultranox P626 (trademark, manufactured by GE Specialty Chemicals), Doverphos S-9432 (trademark, manufactured by Dover Chemical Corporation), and Irgaofos 126 and 126FF (trademarks, manufactured by CIBA SPECIALTY CHEMICALS), etc., any of which can be used. Bis(2,6-di-tert-butyl-4-methylphenyl)pentaerythritol diphosphite is commercially available as ADK STAB PEP-36 (trademark, manufactured by Asahi Denka Co., Ltd.), which can be used readily. Bis{2,4-bis(1-methyl-1-phenylethyl)phenyl}pentaerythritol diphosphite is commercially available as ADK STAB PEP-45 (trademark, manufactured by Asahi Denka Co., Ltd.) and Doverphos S-9228 (trademark, manufactured by Dover Chemical), any of which can be used.

The above-mentioned phosphorus stabilizers can be used alone or in combination of two or more. The content of the phosphorus stabilizer with respect to 100 parts by weight of the polycarbonate resin is preferably 0.01 to 1.0 parts by weight, more preferably 0.03 to 0.8 parts by weight, and further preferably 0.05 to 0.5 parts by weight. The phosphorus stabilizer with a content within the above range can impart the effect of suppressing thermal decomposition during molding, and hardly causes deterioration of mechanical properties.

(ii) Phenolic stabilizer

The resin composition of the present invention can contain a phenolic stabilizer. Examples of the phenolic stabilizer generally include hindered phenol, semi-hindered phenol, and less hindered phenol compounds, and a hindered phenol compound is more preferably used particularly from the viewpoint of providing thermal stability to polycarbonate resins. Examples of the hindered phenol compound include $\alpha$-tocopherol, butylhydroxytoluene, sinapyl alcohol, vitamin E, octadecyl-3-(3,5-di-tert-butyl-4-hydroxyphenyl)propionate, 2-tert-butyl-6-(3 '-tert-butyl-5 '-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tertbutylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-$\alpha$-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tertbutylphenol), triethylene glycol-N-bis-3-(3-tert-butyl-4-hydroxy-5-methylphenyl)propionate, 1,6-hexanediolbis[3-(3,5-di-tert-butyl-4-hydroxyphenyl)propionate], bis[2-tert-butyl-4-methyl 6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3 -methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3,5-di-tert-butylanilino)-1,3,5-triazine, N,N'-hexamethylenebis-(3,5 -di-tert-butyl-4-hydroxyhydrocinnamide), N,N'-bis [3 -(3, 5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3, 5-tris2 [3 (3, 5-di-tert-butyl-4-hydroxyphenyl)propionyloxy]ethyl isocyanurate, tetrakis[methylene-3-(3,5-di-tert-butyl-4-hydroxyphenyl)propionate]methane, triethylene glycol-N-bis-3-(3-tert-butyl-4-hydroxy-5-methylphenyl)propionate, triethylene glycol-N-bis-3-(3-tert-butyl-4-hydroxy-5-methylphenyl)acetate, 3,9-bis[2-{3-(3-tert-butyl-4-hydroxy-5-methylphenyl)acetyloxy}-1,1-dimethylethyl]-2,4,8,10-tetraoxaspiro[5,5]undecane, tetrakis[methylene-3-(3-tert-butyl-4-hydroxy-5-methylphenyl)propionate]methane, 1,3,5-trimethyl-2,4,6-tris(3-tert-butyl-4-hydroxy-5-methylbenzyl)benzene, and tris(3-tert-butyl-4-hydroxy-5-methylbenzyl)isocyanurate. Among the

above compounds, tetrakis[methylene-3-(3-tert-butyl-4-hydroxy-5-methylphenyl)propionate]methane and octadecyl-3-(3,5-di-tert-butyl-4-hydroxyphenyl)propionate are preferably used, and (3,3',3",5,5',5"-hexa-tert-butyl-α,α',α"-(mesitylene-2,4,6-triyl)tri-p-cresol and 1,3,5-tris-(3,5-di-tert-butyl-4-hydroxybenzyl)-1,3,5-triazine-2,4,6(1H,3H,SH)-trione are more preferably used as the one excellent in suppressing deterioration of mechanical properties due to thermal decomposition during processing.

The above-mentioned phenolic stabilizers can be used alone or in combination of two or more. The content of the phenolic stabilizer with respect to 100 parts by weight of the polycarbonate resin is preferably 0.05 to 1.0 parts by weight, more preferably 0.07 to 0.8 parts by weight, and further preferably 0.1 to 0.5 parts by weight. The phenolic stabilizer with a content within the above range can impart the effect of suppressing thermal decomposition during molding, and hardly causes deterioration of mechanical properties.

Either of the phosphorus stabilizer or the phenolic stabilizer is preferably blended, and a combination thereof is more preferred. The phosphorus stabilizer and the phenolic stabilizer are preferably blended with respect to 100 parts by weight of the polycarbonate resin respectively at 0.01 to 0.5 parts by weight and 0.01 to 0.5 parts by weight when used in combination.

(iii) UV absorber

The polycarbonate resin composition of the present invention can contain an UV absorber. Examples of benzophenone UV absorbers include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, and 2-hydroxy-4-methoxy-2'-carboxybenzophenone.

Examples of benzotriazole UV absorbers include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole; and polymers having a skeleton of 2-hydroxyphenyl-2H-benzotriazole such as a copolymer of 2-(2'-hydroxy-5-methacryloxyethylphenyl)-2H-benzotriazole and a vinyl monomer which can be copolymerized with the benzotriazole monomer and a copolymer of 2-(2'-hydroxy-5-acryloxyethylphenyl)-2H-benzotriazole and a vinyl monomer which can be copolymerized with the benzotriazole monomer.

Examples of hydroxyphenyltriazine UV absorbers include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol, and 2-(4,6-diphenyl-1,3,5-triazin-2-yl)-5-butyloxyphenol. Further, there is included a compound in which the above compound is converted by replacing a phenyl group with a 2,4-dimethylphenyl group, such as 2-(4, 6-bis(2,4-dimethylphenyl)-1,3, 5-triazin-2-yl)-5-hexyloxyphenol.

Examples of cyclic imino ester UV absorbers include 2,2'-p-phenylenebis(3,1-benzoxazin-4-one), 2,2'-m-phenylenebis(3,1-benzoxazin-4-one), and 2,2'-p,p'-diphenylenebis(3,1-benzoxazin-4-one).

Examples of cyanoacrylate UV absorbers include 1,3-bis-[(2'-cyano-3',3'-diphenylacryloyl)oxy]-2,2-bis[(2-cyano-3,3-diphenylacryloyl)oxy]methyl)propane, and 1,3-bis-[(2-cyano-3,3-diphenylacryloyl)oxy]benzene.

Further, the above-mentioned UV absorber may be a polymer-type UV absorber obtained by copolymerizing a UV-absorbing monomer, which is the UV absorber with a structure of a monomer compound capable of radical polymerization, and/or a photostable monomer and a monomer such as alkyl(meth)acrylate. Preferred examples of the UV-absorbing monomer include compounds containing a benzotriazole skeleton, a benzophenone skeleton, a triazine skeleton, a cyclic iminoester skeleton, and a cyanoacrylate skeleton in the ester substituent of the (meth)acrylic acid ester.

The above-mentioned UV absorbers can be used alone or in combination of two or more.

The content of the UV absorber with respect to 100 parts by weight of the polycarbonate resin is preferably 0.1 to 10 parts by weight, more preferably 0.12 to 5 parts by weight, and further preferably 0.15 to 3 parts by weight. The UV absorber with a content within the above range can impart sufficient light resistance, and prevent appearance defects and deterioration of physical properties due to gas generation during molding, etc., which is preferable.

(iv) Hindered amine light stabilizer

The polycarbonate resin composition of the present invention may contain a hindered amine light stabilizer.

Hindered amine light stabilizers are generally called HALS (Hindered Amine Light Stabilizer), are compounds having a 2,2,6,6-tetramethylpiperidine skeleton in their structure, and examples thereof include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, bis(1,2,2,6,6-pentamethyl-4-piperidyl)carbonate, bis(1,2,2,6,6-pentamethyl-4-piperidyl)oxalate, bis(1,2,2,6,6-pentamethyl-4-piperidyl)malonate, bis(1,2,2,6,6-pentamethyl-4-piperidyl)sebacate, bis(1,2,2,6,6-pentamethyl-4-piperidyl)adipate, bis(1,2,2,6,6-pentamethyl-4-piperidyl)terephthalate, N,N'-bis-2,2,6,6-tetramethyl-4-piperidinyl-1,3-benzenedicarboxamide, 1,2-bis(2,2,6,6-tetramethyl-4-pyperidyloxy)ethane, α,α'-bis(2,2,6,6-tetramethyl-4-piperidyloxy)-p-xylene, bis(2,2,6,6-tetramethyl-4-piperidyltolylene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricarboxylate, N,N',N'',N'''-tetrakis-(4,6-bis-(butyl-(N-methyl-2,2,6,6-tetramethylpiperidin-4-yl)amino)-triazin-2-yl)-4,7-diazadecane-1,10-diamine, a polycondensate of dibutylamine·1,3,5-triazine·N,N'-bis(2,2,6,6-tetramethyl-4-piperidyl)-1,6-hexamethylenediamine and N-(2,2,6,6-tetramethyl-4-piperidyl)butylamine, poly[{6-(1,1,3,3-tetramethylbutyl)amino-1,3,5-triazine-2,4-diyl}{(2,2,6,6-tetramethyl-4-piperidyl)imino}hexamethylene { (2,2,6,6-tetramethyl-4-piperidyl)imino}], tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, tris(2,2,6,6-tetramethyl-4-piperidyl)-benzene-1,3,4-tricarboxylate, 1-[2-{3-(3,5-di-t-butyl-4-hy droxyphenyl)propionyloxy }butyl] -4- [3 -(3,5 -di-t-butyl-4-hydroxyphenyl)propionyloxy]2,2,6,6-tetramethylpiperidine, and a condensate of 1,2,3,4-butanetetracarboxylic acid, 1,2,2,6,6-pentamethyl-4-piperidinol and β,β,β',β'-tetramethyl-3,9-[2,4,8,10-tetraoxaspiro(5,5)undecane]diethanol.

The hindered amine light stabilizer is roughly classified by an atom/group bonding to a nitrogen atom in the piperidine skeleton into three types: N-H type (hydrogen is bonded to the nitrogen atom), N-R type (an alkyl group (R) is bonded to the nitrogen atom), and N-OR type (an alkoxy group (OR) is bonded to the nitrogen atom), and the N-R or N-OR type, having low basicity, is more preferably used in a polycarbonate resin from the viewpoint of the basicity of the hindered amine light stabilizer.

The hindered amine light stabilizer can be used alone or in combination of 2 or more. The content of the hindered amine light stabilizer with respect to 100 parts by weight of the polycarbonate resin is preferably 0.01 to 2 parts by weight, more preferably 0.05 to 1 part by weight, further preferably 0.08 to 0.7 parts by weight, and particularly preferably 0.1 to 0.5 parts by weight. The hindered amine light stabilizer with a content within the above range can impart sufficient light resistance, and prevent appearance defects due to gas generation during molding, etc. and deterioration of physical properties due to decomposition of the polycarbonate resin, which is preferable.

(v) Other additives

In addition, the polycarbonate resin composition of the present invention can contain a small amount of an additive known per se in order to impart various functions to the molded article and improve its properties. These additives are added in normal amounts as long as they do not impair the object of the present invention.

The additives include sliding agents (e.g. PTFE particles), light diffusing agents (e.g. acrylic cross-linked particles, silicone cross-linked particles, ultra-thin glass flakes, calcium carbonate particles), fluorescent dyes, inorganic phosphors (e.g. aluminate as a base crystal), antistatic agents, crystal nucleating agents, inorganic and organic antibacterial agents, photocatalyst-antifoulants (e.g. fine particle titanium oxide, fine particle zinc oxide), radical generators, infrared absorbers (heat absorption agents), and photochromic agents.

[Examples]

The present invention will be further described with reference to the following examples. Note that, unless otherwise specified, "parts" in the examples is "parts by weight", and "%" is "% by weight". Evaluation was performed in the following manner.

(i) Appearance of molded article (designability)

Using obtained pellets, injection molding was carried out under the conditions: cylinder temperature of 260°C, mold temperature of 60°C, and injection speed of 30 mm/s, to obtain a 2-mm thick molded plate (length 90 mm × width 50 mm) with an arithmetic mean roughness (Ra) of 0.03 μm and then the external appearance (designability) of the

molded article was observed.

Note that, the appearance of the molded article was checked for the presence or absence of dot-like designability, and was marked: "Good" - dot-like designability was confirmed, "Poor" - though dot-like designability was confirmed, the appearance was unsatisfactory due to metal foreign substance, etc. and "Bad" - dot-like appearance was not confirmed.

(ii) Flame retardancy

V test was performed in accordance with UL94 using a UL test piece obtained by the following manner. Note that, "HB" indicates the case where the evaluation was not able to satisfy any of the criteria of V-0, V-1, and V-2.

[Examples 1 to 4, Comparative Examples 1 to 9]

Mixtures of each component having the composition shown in Table 1 were separately fed through the two feed ports of the extruder. The components were sufficiently mixed using premixing means such as a V-type blender, a Henschel mixer, and an extrusion mixer to obtain a mixture to be added to each feed port. A mixture of components A and D to G was fed from the first feed port, and a mixture of components B and C was fed from the second feed port, and these were melt-kneaded by a vented twin-screw extruder. The mixture was subjected to melt-kneading using a vented twin screw extruder with a diameter of 44 mm (Japan Steel Works, Ltd. TEX44αII-25AW-3V) under the conditions of screw rotation speed of 230 rpm, discharge rate of 150 kg/h, and vent pressure of 3 kPa to obtain pellets. Incidentally, the extrusion temperature was 260°C from the first feed port to the die. A part of the obtained pellets was dried at 80 to 100°C for 6 hours in a hot air circulating dryer, and then molded using an injection molding machine at a cylinder temperature of 250°C and a mold temperature of 60°C to obtain a UL test piece. Table 2 shows the evaluation results. Fig. 1 shows the appearance of a molded article obtained by injection molding the pellets obtained in Example 1 under the conditions in above (i).

[Table 1]

| | Composition | | | | | | | | | | | | | | Evaluation result | |
|---|---|---|---|---|---|---|---|---|---|---|---|---|---|---|---|---|
| Component | A-1 | B-1-1 | B-1-2 | B-2-1 | B-2-2 | B-3-1 | B-3-2 | C-1 | D-1 | D-2 | E-1 | F-1 | G-1 | G-2 | | |
| | Polycarbonate resin | Silicone synthetic mica | Silicone synthetic mica | Silicone natural mica | Silicone natural mica | epoxy synthetic mica | epoxy synthetic mica | ABS-1 | Talc | Wollastonite | Flame retardant | Anti-dripping agent | Release agent | Release agent | Flame retardancy | Appearance |
| Ex1 | 100 | 3 | | | | | | 20 | 30 | 10 | | | 1 | 1 | HB | Good |
| Ex2 | 100 | | 1 | | | | | 30 | 10 | 30 | | | 1 | | HB | Good |
| Ex3 | 100 | 1 | | | | | | 20 | 30 | 10 | 30 | 1 | 1 | | V-0 | Good |
| Ex4 | 100 | | 3 | | | | | 30 | 30 | 10 | 30 | 1 | 1 | 1 | V-0 | Good |
| Cex1 | 100 | | 10 | | | | | 30 | 30 | 10 | 30 | 1 | 1 | 1 | V-2 | Poor |
| Cex2 | 100 | | | 1 | | | | 20 | 30 | 10 | 30 | 1 | 1 | 1 | V-2 | Poor |
| Cex3 | 100 | | | | 3 | | | 30 | 30 | 10 | 30 | 1 | 1 | | V-2 | Poor |
| Cex4 | 100 | | | 3 | | | | 20 | 10 | 30 | | | 1 | | HB | Poor |
| Cex5 | 100 | | | | 1 | | | 30 | 30 | 10 | | | 1 | 1 | HB | Poor |
| Cex6 | 100 | | | | | 1 | | 20 | 30 | 10 | 30 | 1 | 1 | | V-0 | Bad |
| Cex7 | 100 | | | | | | 3 | 30 | 30 | 10 | 30 | 1 | 1 | 1 | V-0 | Bad |
| Cex8 | 100 | | | | | 3 | | 20 | 30 | 10 | | | 1 | 1 | HB | Bad |
| Cex9 | 100 | | | | | | 1 | 30 | 10 | 30 | | | 1 | | HB | Bad |

Exn: Example n, Cexn: Comparative example n

Each component described using alphanumeric characters in Table 1 is explained as follows.

(Component A)
A-1: Aromatic polycarbonate resin (polycarbonate resin powder with a viscosity average molecular weight of 22,400 made from bisphenol A and phosgene by a conventional method, Panlite L-1225WP (product name) manufactured by Teijin Limited)
(Component B)

B-1: Synthetic mica powder surface-coated with a silicone binder resin containing a coloring agent

B-1-1: A sample was prepared by adding, with respect to 100% of synthetic mica powder surface-coated with a silicone binder resin, the following coloring agents: 5.0% titanium dioxide (TIPAQUE PC-3, manufactured by ISHIHARA SANGYO KAISHA, LTD.), 0.4% carbon black (CB950, manufactured by Mitsubishi), 0.28% yellow calcined pigment (42-118A, manufactured by Tokan Material Technology Co., Ltd.), and 0.2% red iron oxide (R180M, manufactured by Bayferrox) to have an average particle size of 500 μm.
B-1-2: A sample was prepared by adding, with respect to 100% of synthetic mica powder surface-coated with a silicone binder resin, the following coloring agents: 5.0% titanium dioxide (TIPAQUE PC-3, manufactured by ISHIHARA SANGYO KAISHA, LTD.), 0.05% carbon black (CB950, manufactured by Mitsubishi), 0.1% yellow calcined pigment (42-118A, manufactured by Tokan Material Technology Co., Ltd.), and 0.2% red iron oxide (R180M, manufactured by Bayferrox) to have an average particle size of 1000 μm.

B-2 (Comparative): Natural mica powder surface-coated with a silicone binder resin containing a coloring agent

B-2-1: A sample was prepared by adding, with respect to 100% natural mica powder surface-coated with a silicone binder resin, the following coloring agents: 5.0% titanium dioxide (TIPAQUE PC-3, manufactured by ISHIHARA SANGYO KAISHA, LTD.), 0.4% carbon black (CB950, manufactured by Mitsubishi), 0.28% yellow calcined pigment (42-118A, manufactured by Tokan Material Technology Co., Ltd.), and 0.2% red iron oxide (R180M, manufactured by Bayferrox) to have an average particle size of 500 μm.
B-2-2: A sample was prepared by adding, with respect to 100% natural mica powder surface-coated with a silicone binder resin, the following coloring agents: 5.0% titanium dioxide (TIPAQUE PC-3, manufactured by ISHIHARA SANGYO KAISHA, LTD.), 0.05% carbon black (CB950, manufactured by Mitsubishi), 0.1% yellow calcined pigment (42-118A, manufactured by Tokan Material Technology Co., Ltd.), and 0.2% red iron oxide (R180M, manufactured by Bayferrox) to have an average particle size of 1000 μm.

B-3 (comparative): Synthetic mica powder surface-coated with an epoxy binder resin containing a coloring agent

B-3-1: A sample was prepared by adding, with respect to 100% synthetic mica powder surface-coated with an epoxy binder resin, the following coloring agents: 5.0% titanium dioxide (TIPAQUE PC-3, manufactured by ISHIHARA SANGYO KAISHA, LTD.), 0.4% carbon black (CB950, manufactured by Mitsubishi), 0.28% yellow calcined pigment (42-118A, manufactured by Tokan Material Technology Co., Ltd.), and 0.2% red iron oxide (R180M, manufactured by Bayferrox) to have an average particle size of 500 μm.
B-3-2: A sample was prepared by adding, with respect to 100% synthetic mica powder surface-coated with an epoxy binder resin, the following coloring agents: 5.0% titanium dioxide (TIPAQUE PC-3, manufactured by ISHIHARA SANGYO KAISHA, LTD.), 0.05% carbon black (CB950, manufactured by Mitsubishi), 0.1% yellow calcined pigment (42-118A, manufactured by Tokan Material Technology Co., Ltd.), and 0.2% red iron oxide (R180M, manufactured by Bayferrox) to have an average particle size of 1000 μm.

(Component C)
C-1: ABS-1: ABS resin[700-314 (trade name) manufactured by Toray, butadiene rubber content of about 12% by weight, average rubber particle size: 350 nm]
(Component D )

D-1: Talc ( HST 0.8 (trade name), manufactured by Hayashi Kasei Co., Ltd., average particle size: 3.5 μm)
D-2: Wollastonite (H-1250F (trade name), manufactured by Shimizu Industrial Co., LTD., number average fiber diameter: 2.1 μm, weighted average fiber length: 26 μm)

(Component E)
E-1: Phosphoric acid ester containing bisphenol A bis(diphenyl phosphate) as a main component (CR-741 (trade

name), manufactured by Daihachi Chemical Industry Co., Ltd.)
(Component F)
F-1: PTFE (Polyflon MPA FA500H (trade name), manufactured by Daikin Industries, Ltd.)
(Component G )

G-1: Olefin wax produced by copolymerization of α-olefin and maleic anhydride (Diacarna 30M (trade name), manufactured by Mitsubishi Chemical Corporation)
G-2: Fatty acid ester release agent (Rikemal SL900 (product name), manufactured by Riken Vitamin Co., Ltd.)

[Industrial applicability]

Since the polycarbonate resin composition of the present invention is excellent in molded article appearance, and the molded article formed from the resin composition has a dot-like appearance with excellent designability, the polycarbonate resin composition is suitably used as a housing material in the field such as OA equipment, electronic and electrical equipment, and the like, and specifically useful in the application for a casing of mobile phones, tablets, and the like.

## Claims

1. A polycarbonate resin composition containing 0.01 to 8 parts by weight of (B) synthetic mica powder surface-coated with a silicone binder resin containing a coloring agent (component B) with respect to 100 parts by weight of (A) polycarbonate resin (component A).

2. The polycarbonate resin composition according to claim 1, wherein the synthetic mica powder of component B has an average particle size of 100 to 5000 μm.

3. The polycarbonate resin composition according to claim 1, wherein the composition contains 1 to 100 parts by weight of (C) rubber-reinforced styrenic resin (component C) with respect to 100 parts by weight of (A) polycarbonate resin (component A).

4. The polycarbonate resin composition according to claim 1, wherein the composition contains 1 to 100 parts by weight of (D) inorganic filler other than synthetic mica powder (component D) with respect to 100 parts by weight of (A) polycarbonate resin (component A).

5. The polycarbonate resin composition according to claim 4, wherein the inorganic filler of component D is at least one inorganic filler selected from the group consisting of talc and wollastonite.

6. The polycarbonate resin composition according to claim 1, wherein the composition contains 1 to 100 parts by weight of (E) flame retardant (component E) with respect to 100 parts by weight of (A) polycarbonate resin (component A).

7. The polycarbonate resin composition according to claim 1, wherein the composition contains 0.01 to 10 parts by weight of (F) anti-dripping agent (component F) with respect to 100 parts by weight of (A) polycarbonate resin (component A).

8. The polycarbonate resin composition according to claim 1, wherein the composition contains 0.01 to 10 parts by weight of (G) release agent (component G) with respect to 100 parts by weight of (A) polycarbonate resin (component A).

9. A molded article having a dot-like appearance formed from the polycarbonate resin composition according to any one of claims 1 to 8.

[Fig. 1]

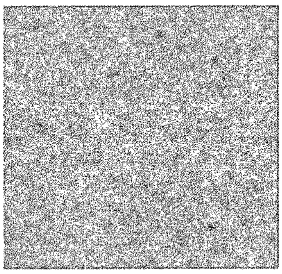

**INTERNATIONAL SEARCH REPORT**

International application No. PCT/JP2020/021745

A. CLASSIFICATION OF SUBJECT MATTER
Int.Cl. C08K9/06(2006.01)i, C08L51/04(2006.01)i, C08L69/00(2006.01)i, C08K3/013(2018.01)i, C08K3/34(2006.01)i
FI: C08L69/00, C08K9/06, C08K3/34, C08L51/04, C08K3/013
According to International Patent Classification (IPC) or to both national classification and IPC

B. FIELDS SEARCHED
Minimum documentation searched (classification system followed by classification symbols)
Int.Cl. C08K9/06, C08L51/04, C08L69/00, C08K3/013, C08K3/34

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-191608 A (TOYO INK MFG CO., LTD.) 02 August 2007 (2007-08-02) | 1-9 |
| A | KR 10-2011-0057415 A (SAMSUNG ELECTRONICS CO., LTD.) 01 June 2011 (2011-06-01) | 1-9 |
| A | US 2013/0172468 A1 (CHEIL INDUSTRIES INC.) 04 July 2013 (2013-07-04) | 1-9 |
| A | JP 2015-187234 A (TORAY INDUSTRIES, INC.) 29 October 2015 (2015-10-29) | 1-9 |
| A | CN 103554868 A (SHANGHAI LANGYI FUNCTIONAL MATERIALS CO., LTD.) 05 February 2014 (2014-02-05) | 1-9 |
| A | CN 103724926 A (SHANGHAI KUMHO SUNNY PLASTICS) 16 April 2014 (2014-04-16) | 1-9 |
| A | JP 60-92359 A (MERCK PATENT GMBH) 23 May 1985 (1985-05-23) | 1-9 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 August 2020 | 18 August 2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/021745

| | | |
|---|---|---|
| JP 2007-191608 A | 02 August 2007 | (Family: none) |
| KR 10-2011-0057415 A | 01 June 2011 | (Family: none) |
| US 2013/0172468 A1 | 04 July 2013 | EP 2610293 A1<br>KR 10-2013-0078748 A<br>CN 103183951 A<br>TW 201326284 A |
| JP 2015-187234 A | 29 October 2015 | (Family: none) |
| CN 103554868 A | 05 February 2014 | (Family: none) |
| CN 103724926 A | 16 April 2014 | (Family: none) |
| JP 60-92359 A | 23 May 1985 | US 4544415 A<br>EP 141174 A1<br>DE 3334598 A1<br>MX 156994 A<br>AU 3335784 A<br>PL 249688 A<br>ES 536135 A<br>FI 843712 A<br>BR 8404762 A<br>CA 1218906 A<br>CS 249524 B<br>HU 36163 A<br>IN 162423 A<br>ZA 8407467 A<br>KR 10-1985-0002589 A<br>AU 564072 B<br>IN 162423 B |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006342199 A
- JP 2009120637 A
- US 4379910 A
- JP 60258263 A
- JP 63154744 A
- JP 4272957 A
- JP 6220210 A
- JP 8188653 A
- JP 9095583 A
- JP 11029679 A

### Non-patent literature cited in the description

- *Kagaku Kogaku,* 1984, vol. 48 (6), 415
- *Kagaku Kogaku,* 1989, vol. 53 (6), 423